# EUROPEAN PATENT APPLICATION

(11) **EP 1 672 488 A2**
(43) Date of publication of application: **21.06.2006**
(21) Application number: 05006007.8
(22) Date of filing: 18.03.2005
(51) Int. Cl.: G06F 9/445

(54) **Compile time linking via hashing technique**

(30) Priority: 14.12.2004 MY 0405145
(71) Applicant: Axiomatic Solutions SDN.BHD., 43400 Serdang Selangor (MY)
(72) Inventor: Mohd, Hanafiah Abdullah, 43650 Bangi Selangor Darul Ehsan (MY)
(74) Representative: Viering, Jentschura & Partner

(57) **Abstract**

A linker is usually used, in post processing of compiling high-level languages such as C into machine executable language, to bind separately compiled object files and resolve the addresses (142) of global variables (140) declared in the separate files. The invention proposes linking during compile time by using a special purpose hash table called global variables hash table (130) shared among the separate files. This results in a collection of processed object files that are coherent in terms of their addresses (142) for global variables (140) that could be further assembled correctly into machine executable code. This method is useful for compiling separate high level language source files to generate executable machine code employing a technique of address resolution across separate modules.

## Description

The present invention relates generally to a method of processing arrangements of electric digital data and more particularly to a method of processing arrangements of electric digital data for executing programs. Most particularly the present invention introduces a new method of compiling a high level language into machine executable byte code.

### BACKGROUND TO THE INVENTION

Executable Java byte code is a form of machine executable binary code that runs on the Java Virtual Machine (JVM) that can be installed on most computer platforms. Incidentally, JVM has become the *de facto* standard for platform independent computing. Java programmers write programs in the Java language. However, there are more C programmers than there are Java programmers up to this writing, since for one thing C has been around much longer beginning in 1969, while Java has been available only from the mid 90's.

A sound architectural model is desirable to translate C source programs to Java byte-code so that it can be executed on the JVM. Currently, there are numerous commercial Java compiler kits and C compiler kits on the market. However, there is no commercial C compiler kit that emits Java byte-code as of this writing. This is most probably due to the perception that Java and Java byte-code are tightly coupled.

The JVM has been designed specifically for the Java language. For instance, JVM does not support "*pointer arithmetic*" and "*explicit memory allocation and de-allocation*", features that are inherent in C. The JVM is also a stack machine as opposed to the traditional register based model used by most other processors such as Intel 80x86™ or Motorola PowerPC™.

The usual approach to compiling C into executable Java byte code uses a linker as a post compile-time step. On traditional (non-JVM) platforms, C program modules are separately compiled into separate assembly code files. The assembly code files in the form of mnemonics are then processed by an assembler to produce separate binary code files, and are still not executable due to incomplete addressing information. As a result, a linker is used to bind all the separate binary files possibly with other pre-compiled library files into one executable file. The linker is responsible to resolve all previously unresolved addresses of global variables and code segments declared and referenced in the separate modules.

The problem with the above traditional method is that it is not readily applicable to programs compiled into Java byte-code. This is due to the fact that in Java byte-code there is no notion of explicit memory addresses that is required by normal linkers. Consequently, the present inventor introduces a new method to overcome the above-said problem by effectively implementing a linker used at compile-time utilizing a hash technique. This is in contrast with the post compile-time approach of traditional linkers. Further to this, the invention ensures some processing-time savings by avoiding a separate link pass by dynamically resolving the addresses of all the global variables residing in the different modules during compile-time.

### SUMMARY OF THE INVENTION

The present invention relates to a new method of linking or binding separately compiled source programs into a coherent set of assembly (mnemonic) files. The new method incorporates a special purpose hash table during the compilation phase to resolve and assign unique addresses to all global variables declared and referenced in separate files. This results in a collection of processed assembly files that are coherent and consistent in terms of the addresses of the global variables that are subsequently assembled into a set of logically linked executable binary files.

This is a novel approach to linking separate modules since the binding process is done during compile-time by means of a hashing technique to resolve addresses of global variables, which is something not done by ordinary linkers.

The inventive step lies in the part where the resolving of the addresses of separately located global variables in separate modules by means of a hashing technique happens during the compilation phase, that is, not after. This step is useful for compiling languages such as C or Pascal into Java byte-code that does not possess the notion of explicit memory architecture with addresses that can be explicitly referenced. This method also simplifies the process of compiling separately written modules with regards to global variables since address resolution is done on the fly and early on during compile-time, made possible by a publicly known hashing technique whose single special purpose hash table is the single source of reference for all the modules being compiled. The same hash function is used across the modules to ensure consistency and correctness in speedily coming up with unique addresses for all the global variables in the various yet logically related modules. Besides generating unique locations, hashing techniques are also well known to be significantly faster than other search techniques.

The invention overcomes the perception that Java and the JVM are only meant for each other, as if making it virtually impossible to write compilers for other languages such as C or Pascal to target to the JVM. The method introduced here does not just apply to the C language but also to other imperative high-level languages such as Ada, Pascal, and the Scheme programming language. Hence, the invention helps to efficiently deploy platform dependant codes via virtual machine on variable computing platform.

### DESCRIPTION OF PREFERED EMBODIMENTS

The invention will now be described in greater detail, by way of an example, with reference to the accompanying drawings, in which:
Fig. 1 shows a block diagram of a computer system including a preferred embodiment of the compiler according to the present invention;
Fig. 2 shows a hashing procedure used by the preferred embodiment;
Fig. 3 shows a block diagram of the data structures processed by the preferred embodiment of the compiler.

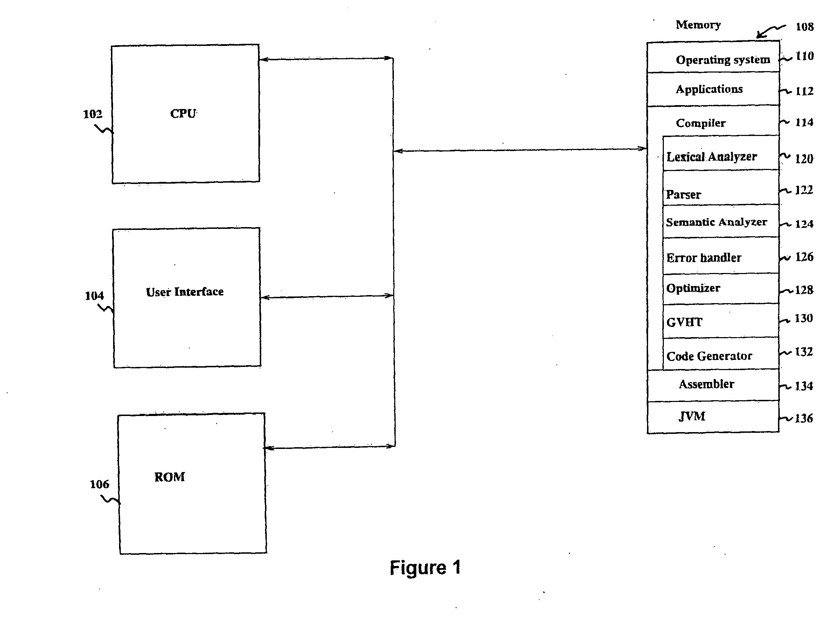

Referring to Fig. 1 there is shown a computer system incorporating a preferred embodiment of the present invention. The preferred computer system is an IBM PC-compatible computer running the Linux operating system. However, other platforms such as the Macintosh™, SUN SPARC™, and MIPS™ based workstations are also applicable. The computer system comprises of a central processing unit (CPU) 102, user interface 104, Read Only Memory (ROM) 106, and memory 108 including both Random Access Memory (RAM) and secondary storage, such as the hard disk storage system. The memory stores: an operating system 110, portions which are also stored in ROM 106; computer applications 112 to be executed by the CPU 102; compiler 114 for compiling high level languages into machine executable languages; an assembler 134 and a Java Virtual Machine (JVM) 136 to execute the Java byte-code produced by the compiler.

The compiler 114 comprises: a lexical analyzer 120 to perform scanning of input source file and convert it into a stream of tokens; a parser 122 to process the code into an abstract syntax tree (AST); a semantic analyzer 124 to check the meaning and validity of the code being compiled; an error-handler 126 to take care of both syntax and semantic errors; an optimizer 128 to optionally improve the speed and reduce space usage of the resulting executables; a Global Variables Hash Table (GVHT) 130 with associated hash function to assign a unique location to each global variable encountered during the compilation process of the separate modules; and a code generator 132 to generate Java byte-code mnemonics. The set of mnemonics is relayed to an assembler 134 to produce an executable binary version. The GVHT 130 is not to be confused with another hash table used within a conventional compiler for the purpose of symbol table construction.

Now the compiling process will be described in detail.

Whenever a source code in a high-level language needs to be compiled, the compiler 114 is activated, and the lexical analyzer 120 breaks the source code into tokens. The token stream is passed to the parser 122 that performs a syntax analysis, and if everything goes well transforms the token stream into an abstract syntax tree (AST) structure. Subsequently, the AST goes through the semantic analyzer 124 to determine if it is a valid program in terms of context sensitivity. If there's an error, it will be processed by the error handler 126. Than, optionally the optimizer 128 processes the AST to try to improve it by removing redundancies and rearranging code to increase speed and reduce space consumption. The code generator 132 then maps the AST into a sequence of Java byte-code mnemonics that is eventually processed by the assembler 134 to produce the binary version of the Java byte-code. The GVHT 130 is constructed during the lexical analysis phase as each global variable name is encountered. The subsequent code generation phase refers to the GVHT 130 to identify addresses of the global variables at hand.

The hash technique involves processing of each token to a global variable name, whereby the string of characters representing the name is traversed and added up. In this case, each global variable is put through a publicly available hash function called *hashpjw* (*pjw* stands for Peter J. Weinberger, the author of the hash function) to come up with hopefully a unique number for each string that represents a global variable name. The number is checked against the GVHT 130 to see if there is any conflict (collision) with another name. In the case of a collision, since an open hashing technique is used, an alternate location in the GVHT 130 is searched for until an empty slot is found or one that has been occupied by the same name previously processed is found. On the other hand, if there is no collision in the first place, the number is immediately used as the address of the global variable.

The *hashpjw* hash function is used to assist in coming up with a unique location in the GVHT 130 for each global variable name being referenced to during the compilation process. And, it is used consistently throughout the compilation of all relevant modules to ensure integrity. The *hashpjw* source code is shown below: 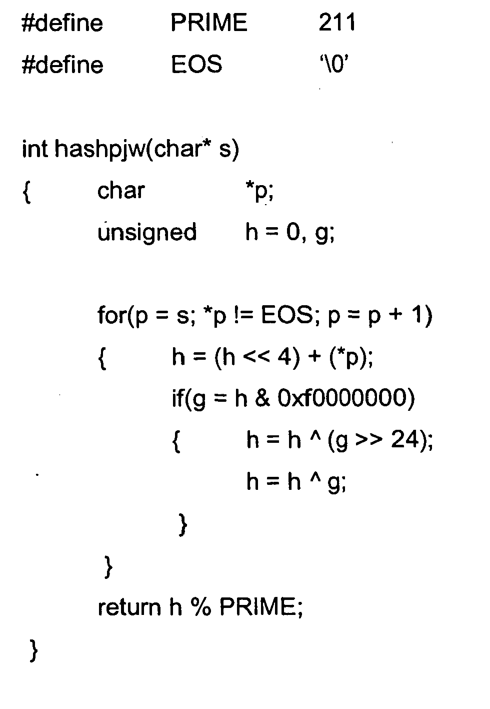 *hashpjw* starts by assigning hash value, *h* to 0. For each character *c,* shift the bits of *h* by 4 positions to the left and add in *c.* If any of the four high-order bits of *h* is 1, shift the four bits right by 24 positions, exclusive-or them into *h*, and reset to 0 any of the 4 high-order bits that was set to 1. Other suitable hash function, capable of generating unique address might also be used.

The address conflict is, particularly, resolved by relocating the latter global variable in an alternate empty address, described by the following C code segment:

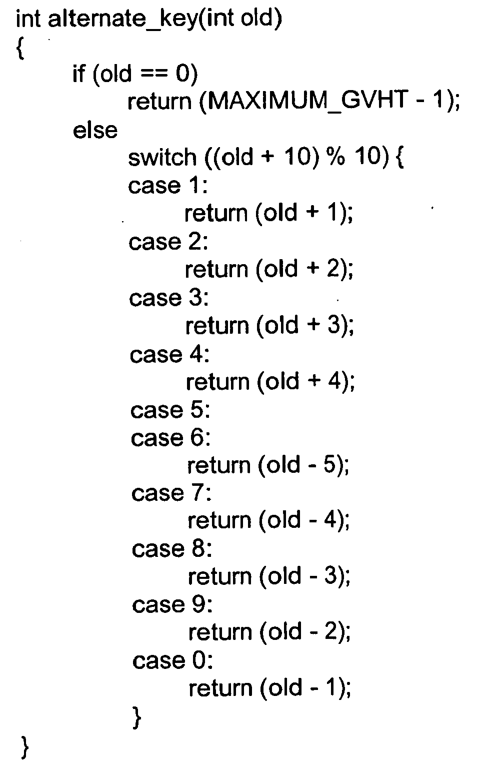

The method of determining an alternative address location in the existence of address conflict is to check if the current address location is 0 in which case the alternative address is the maximum GVHT address location. Otherwise, the value 10 is added to the original address location and then applied a modulus of 10. Then, the resulting value of the operation is added to the original address location, and now treated as the new address location. The new address location is checked for conflict against GVHT (130). In the case of another collision, the above process repeats until an empty slot is found or one that has been occupied by the same name previously processed is found, or when it is discovered that the GVHT (130) is fully occupied in which case the search for an alternative address location fails. The address conflict is resolved by relocating the latter global variable in an alternate empty address, particularly by linear probing in which successive slots a fixed distance apart are probed or quadratic probing in which the space between probes increases quadratically.

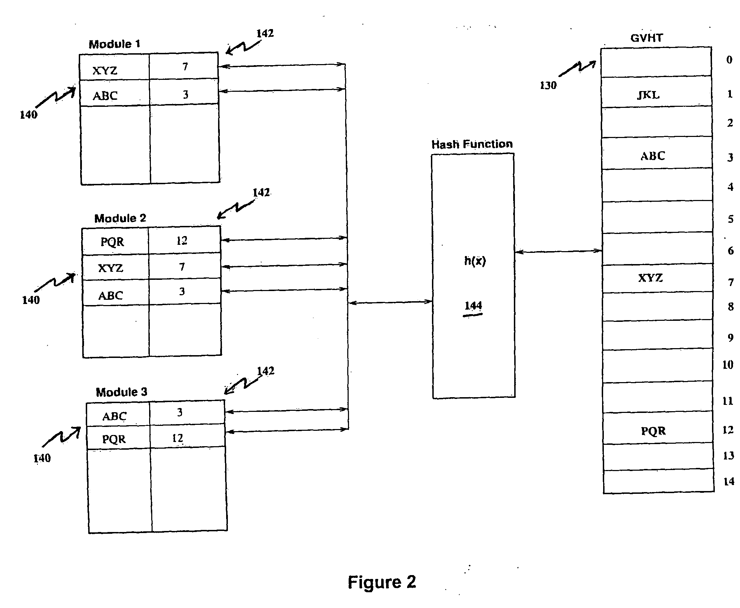

Fig. 2 illustrates an example of the resolution of global variables addresses 142 for three modules being compiled, namely Module 1 which contains global variables XYZ and ABC, Module 2 which has global variables PQR, XYZ, and ABC, and finally Module 3 which has global variables ABC and PQR. Each reference to a global variable 140 for instance ABC will need to be pushed through the hash function 144 and in this case returns the value 3 that is treated as its address. The global variable PQR is given the address value 12 after hashing, and XYZ given the address 7. Notice that the addresses are consistent across all three modules as a result of using the same GVHT130 and the same hash function *hashpjw* across the modules.

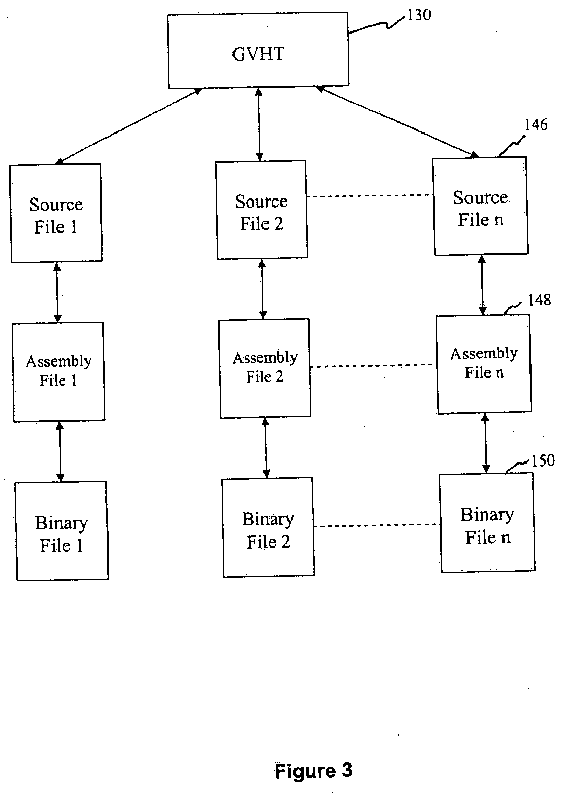

As shown in Fig. 3, separate modules of the source code modules 146 refer to the GVHT 130 to generate an assembly file 148 with resolved addresses 142. The linking is effectively carried out at this time. Subsequently, the assembly file 148 is fed to the assembler 134 to produce executable binary file 150. The executable file in this case for Java has *.class extension. The executable file created on the Linux cased IBM PC-compatible computer can be executed on its platform and other computing platform such as the Macintosh™, SUN SPARC™, and MIPS™ with JVM installed.

## Claims

1. In a computer system, a method of compiling high level language into machine executable language comprises the steps of:
a) Breaking high level language source code into streams of token wherein each token is identified by its global variable (140) name,
b) Constructing a Global Variable Hash Table (GVHT) (130) for each global variable (140) encountered by deriving its unique address (142) through a hash function (144) wherein the GVHT (130) is used as a place to refer each global variable (140) that is tied to a unique address (142) for use by the subsequent code generation,
c) Analyzing the syntax of the token stream,
d) Transforming the syntax into an abstract syntax tree structure,
e) Analyzing the semantics of the abstract syntax tree structure,
f) Generating byte code mnemonics from the abstract syntax tree structure, and
g) Assembling byte code mnemonics into machine executable language.

2. A method of compiling high level language into machine executable language according to claim 1, wherein the GVHT (130) is constructed, hence, constituting a compile-time linker for global variables, comprising the steps of:
a) Traversing and adding up strings of characters of each global variable (140) through a hash function (144),
b) Referring to the GVHT (130) if the computed hash value conflicts with any registered entry,
c) Resolving address conflict of each subsequent global variable, in the event of address conflict, and
d) Registering each global variable (140) in a computed unique address as registered entry.

3. A method of compiling high level language into machine executable language according to claim 2, wherein the hash function (144), is preferably function *hashpjw* which comprises the steps of:
a) Assigning hash value to zero,
b) For each character in the name of a global variable, shifting the bits of hash by four positions to the left and add in the value of the character,
c) For any of the four high order bits of hash is one, shifting the four bits right by twenty four positions,
d) Excusive-or product of c) into hash, and
e) Resetting to zero any of the four higher order bits that was set to one.

4. A method of compiling high level language into machine executable language according to claim 2, wherein the address conflict is resolved by relocating the latter global variable in an alternate empty address.

5. A method of compiling high level language into machine executable language according to claim 2, wherein the address conflict is resolved by relocating the latter global variable in an alternate empty address, particularly by linear probing in which successive slots a fixed distance apart are probed.

6. A method of compiling high level language into machine executable language according to claim 2, wherein the address conflict is resolved by relocating the latter global variable in an alternate empty address, particularly by quadratic probing in which the space between probes increases quadratically.

7. A method of compiling high level language into machine executable language wherein linking to resolve address (142) of global variables (140) is processed during compilation.

8. A method of compiling high level language into machine executable language wherein linking to resolve address (142) of global variables (140) is processed during compilation, particularly by hashing the global variables (140) and constructing a Global Variable Hash Table (GVHT) (130).

9. A method of enabling cross platform programming according to any of claim 1 to claim 8 to execute the machine executable language on any computing platform with virtual machine.
